# EUROPEAN PATENT SPECIFICATION

(11) **EP 3 793 740 B1**
(45) Date of publication and mention of the grant of the patent: **04.03.2026**
(21) Application number: 19730868.7
(22) Date of filing: 16.05.2019
(51) Int. Cl.: B01L 9/06, B65D 25/10, B65D 71/70

(54) **METHOD USING A STORAGE RACK**
METHODE MIT EINEM LAGERGESTELL
METHODE UTILISANT UN RAYONNAGE D'ENTREPOSAGE

(30) Priority: 16.05.2018 GB 201807969
(43) Date of publication of application: 24.03.2021
(73) Proprietor: Samplepod Limited, Port Clarence Middlesbrough TS2 1RZ (GB)
(72) Inventor: TURNER, Andrew, Durham DL5 6PQ (GB)
(74) Representative: Archer, Graham John
(86) International application number: PCT/GB2019/000070
(87) International publication number: WO 2019/220069

(56) References cited:
- EP-A1- 3 700 674
- WO-A1-2010/056884
- US-A1- 2008 028 726
- US-A1- 2009 028 754
- US-A1- 2009 065 470

## Description

The present invention relates to a method for storing and tracking articles using an improved storage rack. In particular, the present invention relates to a method for storing and tracking articles using an improved biological sample container storage rack.

Pathology is central to most areas of healthcare, providing insights into how to manage patient care. This can be achieved by means of using pathology to confirm the diagnosis of a condition, manage the medication of a patient, or monitor the progression of a condition.

It is often the case that the biological sample, which could be for example, blood, urine, or semen, is collected at a hospital or at another remote location such as the office or surgery of a General Practitioner (GP). From there, it is transported to a pathology laboratory, whereupon it is processed.

Pathology laboratories within hospitals are, more often than not, extremely busy, typically processing many biological samples every day. A proportion of these biological samples originate internally from within the hospital itself, and they are delivered to the pathology laboratory via either a pneumatic transport system or via delivery in person. The remaining biological samples are delivered to the pathology laboratory from other sites such as GP surgeries or other hospitals, via a courier for example.

The majority of biological samples are contained within plastic bottles, whereby each plastic bottle is contained within a sealed first sample bag, along with a paper patient identification certificate. A maximum of fifteen sealed first sample bags, each one originating from a particular patient, are then placed within a sealable second bag. The courier then picks up the sealed second bags, and places them all inside an outer insulated bag, whereupon they are transported to the pathology laboratory. In view of the nature of the biological samples, they must normally be delivered to the pathology laboratory very quickly, and sometimes within four hours of collection.

Once the biological samples arrive at the pathology laboratory, the sealed second bags are placed on a bench, whereupon they are torn open and discarded. The sealed first sample bags are then also torn open and discarded, and the plastic bottles containing the biological samples are then placed in storage racks and directed to the correct part of the pathology laboratory for processing.

Although this is a common process, it is inefficient for many reasons. For example, it is very time consuming to pack and unpack the first sample bags and the second bags, both at the GP surgery or hospital of origin, and in the pathology laboratory itself. There is also a huge amount of waste in view of the necessary discarding of the first sample bags and the second bags. There is also a risk that the plastic bottles containing the biological samples could accidentally fall onto the floor when the first sample bags and the second bags are being torn open. There is a further risk that plastic bottles containing biological samples could be accidentally left inside the first sample bags or the second bags, and accidentally discarded. Another inefficiency in the process is the large amount of bench space utilised during the process, particularly in the pathology laboratory itself. In particular, there is a wide variety of sizes of plastic bottles that are typically used for biological samples, which necessitates a number of different types of storage racks, some of which may only be required to hold one or two plastic bottles at any one time.

In an attempt to mitigate this, it is known to utilise foam storage racks. However, such foam storage racks can cause smudging of the patient information which is typically present on a label on the plastic bottles, as a result of the requirement to force the plastic bottle into the foam rack to allow the foam to grip the plastic bottle. The insertion of the plastic bottles into the foam rack in this way can also cause peeling of the label on the plastic bottle. Moreover, the nature of the foam racks means that they cannot typically be re-used as a result of infection control concerns, and so they are single use only, which again, generates a lot of waste and increases costs. Furthermore, foam racks are not typically recyclable.

Further examples of the prior art are disclosed in the following patent applications published under the following numbers WO2010/056884, US2008/028726, US2009/028754, EP3700674 and US2009/065470.

The aim of the present invention is to provide an improved storage rack which overcomes or at least alleviates at least the above-mentioned disadvantages of the prior art.

In accordance with a first aspect of the present invention there is provided a storage rack for receiving articles for storage.

This provides the advantage that articles, for example plastic bottles containing biological samples, of various diameters can be securely and conveniently stored and transported using the same storage rack, when required. As a result, the requirement for more than one storage rack to accommodate articles having different diameters, is obviated, and in this way, less space is taken up in the hospital and in the GP surgery, as well as in the pathology laboratory itself.

This provides the further advantage that the weight-bearing portions can securely retain the articles in the storage rack without causing smudging of, or damage to, the patient information which is typically present on a label on the articles.

In providing a means for both storing and transporting a number of differently sized articles on a single storage rack, this provides the further advantage that the requirement for first sample bags and second bags is obviated. This reduces waste, reduces costs, saves time, and prevents accidental loss of, damage to, or breakage of, the articles.

This provides the further advantage that there is no requirement for personnel at the pathology department to tear open a number of first sample bags and second bags every day, which could otherwise result in a repetitive strain injury.

Preferably, said storage rack comprises substantially vertical surfaces extending between said weight-bearing portions and said datum surface.

Preferably, said substantially vertical surfaces and said weight-bearing portions together define a plurality of connected tubes.

Preferably, said datum surface is disposed above said weight-bearing portions, in use.

Alternatively, said datum surface is disposed below said weight-bearing portions, in use.

Preferably, said weight-bearing portions extend substantially perpendicularly from said substantially vertical surfaces.

Preferably, articles are contained within said connected tubes, in use.

This provides the advantage that articles disposed within the connected tubes are isolated from any spillages originating from adjacent connected tubes.

In accordance with a second aspect of the present invention there is provided a method for storing and tracking articles, comprising the steps:
(a) using a first identifier reading device to read a rack identifier on a rack for retaining articles;
(b) using a second identifier reading device to read an article identifier on a said article;
(c) locating said article in said rack;
(d) in a processor associating said article identifier with said rack identifier; and
(e) repeating steps b to d for further articles to create a database of article identifiers associated with said rack identifier.

This provides the advantage that a user can ascertain which articles are on which storage rack at any one time. This is important when tracking the movement of the articles through the pathology laboratory, and also when tracking the movement of the articles between their original location and the pathology laboratory; for example, from when they leave the GP surgery or hospital site, when they are in transit, and through to the pathology laboratory, without the necessity to track each article separately. In this way, it is only necessary to track the storage rack itself, since the user is aware, as a result of the association of the article identifiers with the rack identifier in the database, which articles are on which storage rack.

This provides the further advantage that the tracking of the articles can be done from further away, since the storage rack is significantly bigger than the articles themselves, and so it can accommodate a rack identifier having a larger surface area. The feature of a rack identifier having a larger surface area means that the first identifier reading device can be held farther away from the rack identifier when it is reading the rack identifier, than would otherwise be the case.

Preferably, said method further comprises sending the database from said processor to a further processor remote from said processor.

Preferably, said method further comprises:
(f) using a third identifier reading device at a predetermined location to read a rack identifier on a rack for receiving articles
(g) removing an article from said rack
(h) using a fourth identifier reading device at said predetermined location to read an article identifier on a said article removed from said rack
(i) in said further processor disassociating said article identifier from said rack identifier if said article identifier is already associated with said rack identifier
(j) repeating steps b to d for further articles to amend said database of article identifiers associated with said rack identifier.

The predetermined location could for example, be the pathology laboratory itself. This provides the advantage that the GP for example, can check that the article is being successfully processed at the pathology laboratory. It also makes resource planning at the pathology laboratory easier.

Preferably, said method further comprises using at least one further identifier reader device at a further predetermined location to read a rack identifier on a rack for receiving articles.

The further predetermined location could for example, be a location during transit between the GP surgery and the pathology laboratory. This provides the advantage that the GP for example, can check that the article is successfully in transit. It also makes resource planning at the pathology laboratory easier.

Preferably said method further comprises using a load cell to measure the mass of the rack and articles therein and to detect a variation in mass not consistent with an expected interaction between a said article and said rack.

This provides the advantage that the processor is able to detect if the mass of the rack and articles therein does not increase within a predetermined period of time of an article identifier being associated with the rack identifier.

Said method may further comprise generating an alarm condition in the event that the detected variation in mass is not consistent with an expected interaction between a said article and said rack.

In this way, the alarm condition is generated if the article identifier is read by the second identifier reading device to associate the article identifier with the rack identifier, but the article itself is not then subsequently located into the storage rack.

This provides the further advantage that the further processor is able to detect if an article identifier is not disassociated from the rack identifier within a predetermined period of time of the mass of the rack and articles therein, decreasing. In this way, the alarm condition is generated if the article itself is removed from the storage rack, but the article identifier is not then subsequently read by the fourth identifier reading device to disassociate the article identifier from the rack identifier.

Said method may further comprise generating an alert in the event that a said article identifier is associated with said rack identifier.

This provides the advantage that the GP for example, is alerted in the event that the article has started the process of being transferred to the pathology laboratory.

Said method may further comprise generating a further alert in the event that a said article identifier is disassociated from said rack identifier.

This provides the advantage that the GP for example, is alerted in the event that the article has reached its destination at the pathology laboratory and is being processed.

In accordance with a third aspect of the present invention there is provided a system for storing and tracking articles, comprising:
a first identifier reading device for reading a rack identifier on a rack for retaining articles;
a second identifier reading device for reading an article identifier on a said article; and
a processor for associating said article identifier with said rack identifier and creating a database of article identifiers associated with said rack identifier as multiple article identifiers are read using said second identifier reading device.

The present invention will now be described, by means of example only, and not in any limitative sense, with reference to the accompanying drawings in which: -
Figure 1 is an exploded perspective view of a storage rack in accordance with a first embodiment of the present invention;
Figure 2 is a perspective view of the storage rack of Figure 1;
Figure 2a is a perspective view of the storage rack of Figure 1, showing articles in situ;
Figure 3 is a perspective view of a storage rack in accordance with a second embodiment of the present invention;
Figure 3a is a plan view of the storage rack of Figure 3;
Figure 3b is a perspective view of a portion of the storage rack of Figure 3; and
Figure 4 shows a schematic view of a system for storing and tracking articles in accordance with an aspect of the present invention.

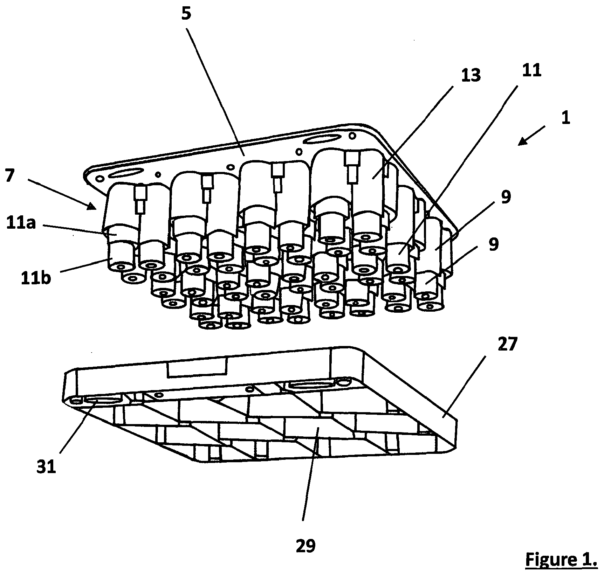

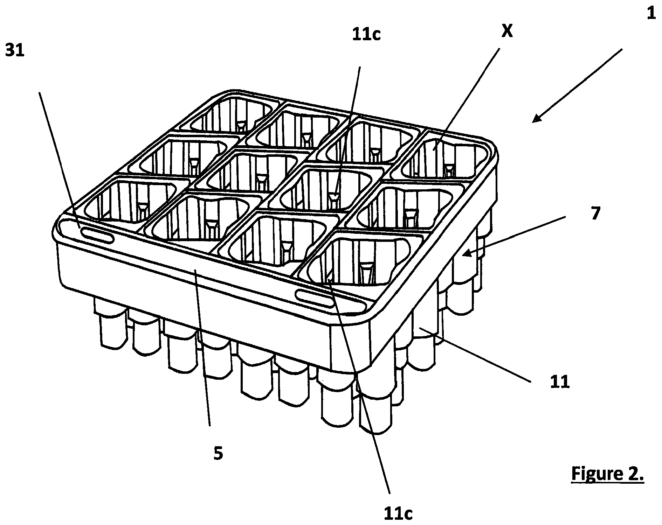

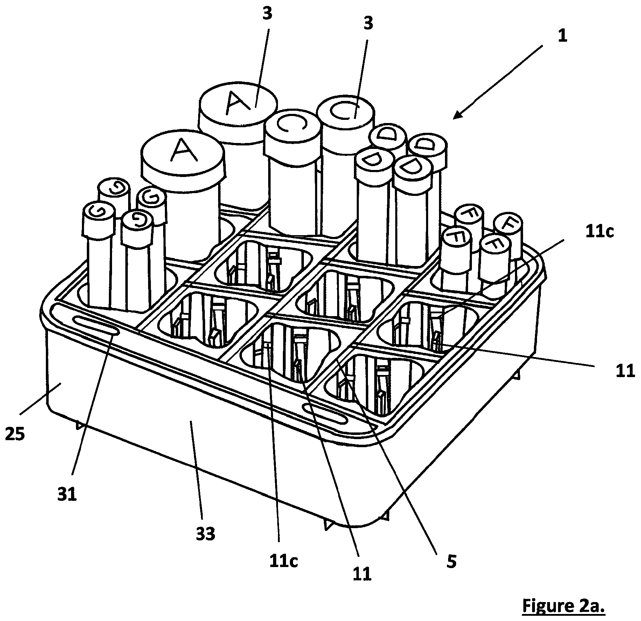

With reference to Figures 1, 2 and 2a in particular, a storage rack is represented generally by reference numeral 1. The storage rack 1 can be used to store, transport, and track, articles, as will be described further below. It is to be appreciated that articles could for example, be plastic bottles 3 for storing biological samples.

The storage rack 1 comprises a datum surface 5 and a plurality of protrusions 7 extending downwardly from the datum surface 5, in use. The datum surface 5 is generally flat. The protrusions 7 each comprise a plurality of connected tubes 9 which are defined by weight-bearing portions or surface in the form of horizontally extending ridges 11 and vertical surfaces in the form of tube walls 13. As can be clearly seen, the ridges 11 extend perpendicularly from the tube walls 13 and therefore between the connected tubes. The ridges provide a support surface to support and retain the plastic bottles 3.

The datum surface 5 and the protrusions 7 are made from a flexible material including but limited to silicone, and in this way, the storage rack 1 can be easily cleaned. Moreover, the flexible nature of the datum surface 5 and the protrusions 7 results in it being easier for a user to insert plastic bottles 3 into the connected tubes 9.

The storage rack 1 further comprises a rigid frame 27 for supporting the datum surface 5. The rigid frame 27 is removably attachable to the datum surface 5 and comprises apertures 29 through which the protrusions 7 extend. In this way, the flexible datum surface 5 and the flexible protrusions 7 are provided with support.

The rigid frame 27 and the datum surface 5 each comprise a plurality of drainage slots 31.

The ridges 11 each define an opening X through which a plastic bottle 3 can extend if it is not being supported by the ridge 11. In this way, when a plastic bottle 3 is located inside a protrusion 7, it is retained on a ridge 11 at a distance from the datum surface 5 which depends upon the diameter of the plastic bottle 3. To elaborate, the maximum diameter of the plastic bottle 3 that can be received on a ridge 11 differs with respect to the distance of the ridge 11 from the datum surface 5. As can be clearly seen from Figures 1, 2 and 2a, a first ridge 11a is able to receive a plastic bottle 3 having a maximum diameter A, and a second ridge 11b is able to receive a plastic bottle 3 having a maximum diameter C, which is less than the diameter A, the second ridge 11b being farther away from the datum surface 5 than the first ridge 11a.

In this way, plastic bottles 3 of various diameters can be securely and conveniently stored and transported within a protrusion 7, in a specific connected tube 9 and on a specific ridge 11, according to its diameter, when required. As can be clearly seen, the plastic bottles 3 are contained within a connected tube 9. As a result, the requirement for more than one storage rack 1 to accommodate plastic bottles 3 having different diameters, is obviated, and in this way, less space is taken up in the hospital and in the GP surgery, as well as in the pathology laboratory itself.

Previously, a number of differently sized storage racks had to be used, dependent upon the variation in the diameter of the plastic tubes 3.

The plastic bottles 3 are conveniently contained in the storage rack 1 by means of resting on a ridge 11 within the connected tubes 9, and in this way, the plastic bottles 3 can be easily and securely stored without causing smudging of, or damage to, any patient information that is present on the plastic bottles 3.

It is to be appreciated that the connected tubes 9 form concentric circles when the storage rack 1 is viewed from above. In this way, the removal of the plastic bottles 3 from the storage rack 1 when required, is made easier, since no matter what ridge 11 a plastic bottle 3 rests on, it will have the same centre line as a plastic bottle 3 resting on a different ridge 11 in the same protrusion 7 would have, which makes automated picking by a robot for example, easier. As can be seen in figure 1, the tubes 9 extend one from another with the ridges 11 therebetween. These concentric tubes can be described as being overlapping vertically with respect to the datum surface. From figures 2 and 2a it can be seen that these vertically overlapping tubes are grouped together in arrangements of four horizontally overlapping tubes with the uppermost tubes (of largest diameter) horizontally overlapping and the lower tubes separated. The four horizontally overlapping tubes create a complex shape that allows the differently sized plastic bottles to be inserted as can be seen in figure 2a with the bottles baring the lids labelled D, F and G. The arrangement of four concentric circles such that the centres are arranged in a rhombus or parallelogram. This allows a pair of bottles (labelled C) that are larger than those labelled D, F and G to be inserted into the grouping of four overlapping tubes 9. In addition, to accommodate large short bottles, such as those labelled A, the junctions between the 4 largest tubes, those closest to the datum surface, are rounded off approximately using a circle with a diameter slightly larger than the distance between the junctions of those uppermost tubes. This creates the small ridge 11c onto which the bottle with the top labelled A can sit.

The interior surfaces of the connected tubes 9 comprise a plurality of interior contact nubs, ribs or other protrusions (not shown) to provide improved retention of a plastic bottle 3 contained therein, and to reduce friction.

A protective case 25 is further provided, inside of which the storage rack 1 can be disposed, so that plastic bottles 3 are protected during transport from a GP surgery to the pathology laboratory, for example.

In this way, plastic bottles 3 having different diameters can be securely and conveniently stored on a single storage rack 1, and then transported to the pathology laboratory, when required.

The protective case 25 comprises a base container 33 and a lid (not shown).

A temperature sensor (not shown) is also provided, to ensure that the biological samples within the plastic bottles 3 are maintained within an acceptable temperature range.

The protective case 25 also comprises an absorbent mat (not shown).

The lid of the protective case 25 comprises a recess (not shown) inside of which any plastic bottles that are too long to be contained within the connected tubes 9, may extend.

The storage system 1 is easy to manufacture, and in particular is less likely to snap during any moulding process, in view of its design.

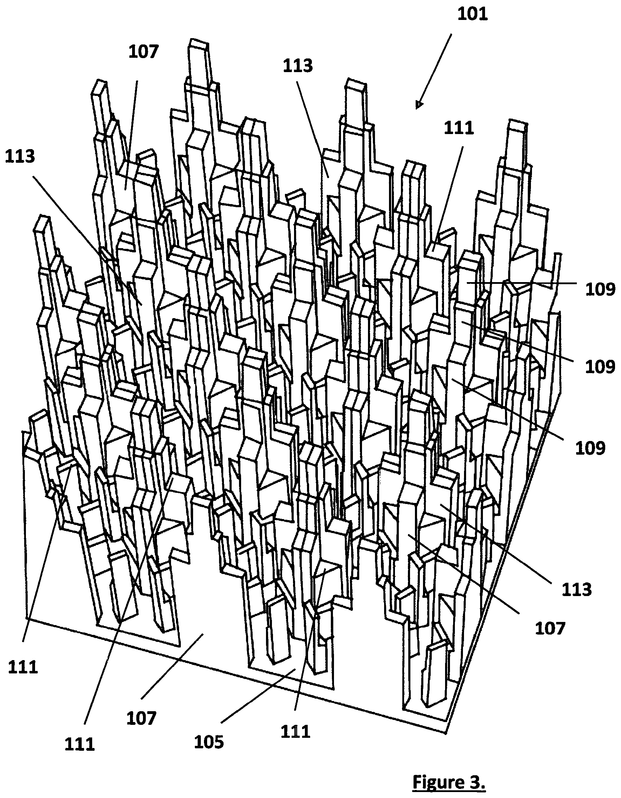

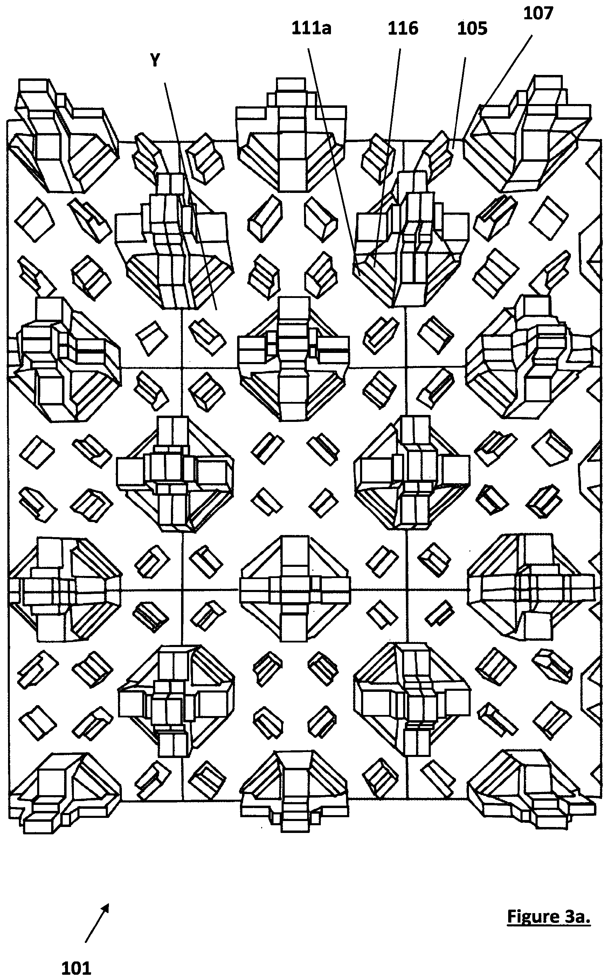

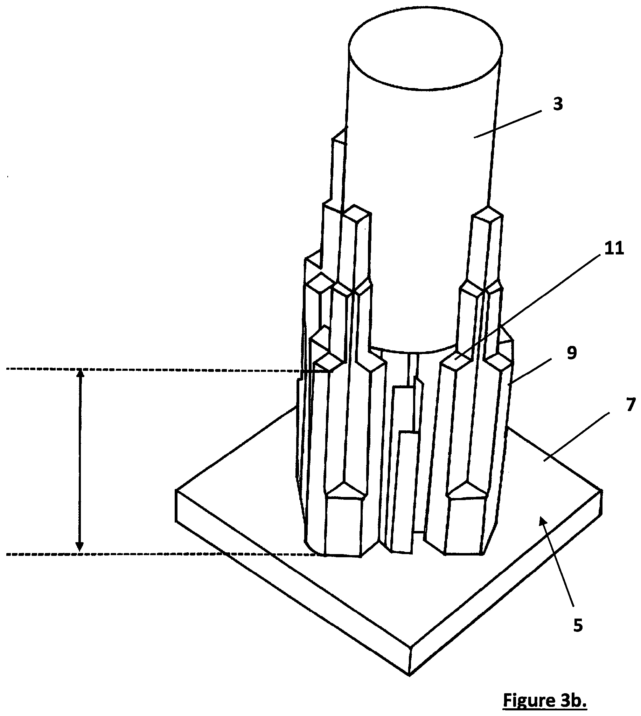

Turning now to Figures 3, 3a and 3b, a storage rack is represented generally by reference numeral 101. The storage rack 101 comprises a datum surface 105 and a plurality of protrusions 107, each protrusion 107 comprising a plurality of connected tubes 109 and extending upwardly from the datum surface 105. The datum surface 105 is generally flat.

The connected tubes 109 are defined by weight-bearing portions in the form of horizontally extending ridges 111 and vertical surfaces in the form of tube walls 113. As can be clearly seen, the ridges 111 extend perpendicularly from the tube walls 113.

The ridges 111 together define an opening Y through which a plastic bottle 3 can extend if it is not being supported by the ridges 111. In this way, when a plastic bottle 3 is located between the connected tubes 109, such that it is surrounded by the connected tubes 109, it is retained on ridges 111 at a distance from the datum surface 105 which depends upon the diameter of the plastic bottle 3.

To elaborate, the maximum diameter of the plastic bottle 3 that can be received on a ridge 111 differs with respect to the distance of the ridge 111 from the datum surface 105. As can be clearly seen from Figures 3, 3a and 3b, a first ridge 111a is able to receive a plastic bottle 3 having a maximum diameter K (not shown), and a second ridge 111b is able to receive a plastic bottle 3 having a maximum diameter L (not shown), which is greater than the diameter K, the second ridge 111b being farther away from the datum surface 105 than the first ridge 111a.

In this way, plastic bottles 3 of various diameters can be securely and conveniently stored and transported, between connected tubes 109 and on ridges 111, according to their diameter, when required. As a result, the requirement for more than one storage rack 101 to accommodate plastic bottles 3 having different diameters, is obviated, and in this way, less space is taken up in the hospital and in the GP surgery, as well as in the pathology laboratory.

Previously, a number of differently sized storage racks had to be used, dependent upon the variation in the diameter of the plastic tubes 3.

The plastic bottles 3 are conveniently contained by resting on ridges 111, between the connected tubes 109, and in this way, the plastic bottles 3 can be stored without causing smudging of, or damage to, any patient information that is present on the plastic bottles 3.

The storage rack 101 further comprises a cover (not shown), which is selectively attachable to the datum surface 105. When the cover is attached to the datum surface 105, any plastic bottles 3 in situ on the storage rack 101 are safely covered over by the cover. The cover also provides added stability to the plastic bottles 3 by helping to maintain the plastic bottles 3 in situ as the storage rack 101 is being transported.

The dimensions of the storage rack 101, and in particular the relative heights of the connected tubes 109, are adapted so that top surfaces of the plastic bottles 3, when in situ on the storage rack 101, are at approximately the same distance from the datum surface 105. In this way, the cover can be conveniently and securely attached to the datum surface 105, to retain the cover in position and adequately protect the plastic bottles 3.

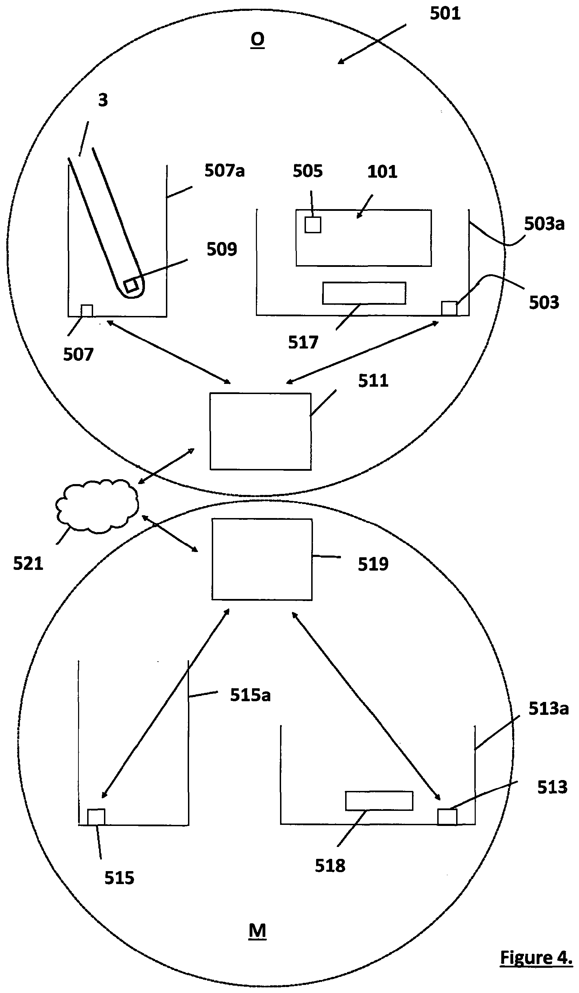

Turning now to Figure 4, a schematic view of a system for storing and tracking articles is represented generally by reference numeral 501.

The system 501 comprises a first identifier reading device in the form of a first radio frequency tag reader 503. The first radio frequency tag reader 503 is adapted to read a rack identifier in the form of a first radio frequency tag 505 on a storage rack, which could for example be a storage rack 1 or 101 as described with reference to Figures 1, 2, 2a, 3, 3a and 3b.

The first radio frequency tag reader 503 is incorporated in a first tray 503a, upon which the storage rack 1, 101 can conveniently sit when the first radio frequency tag 505 is to be read.

The system 501 further comprises a second identifier reading device in the form of a second radio frequency tag reader 507. The second radio frequency tag reader 507 is adapted to read an article identifier in the form of a second radio frequency tag 509 on an article, which could for example be a plastic bottle 3.

The second radio frequency tag reader 507 is incorporated in a first cup 507a, inside of which the plastic bottle 3 can conveniently sit when the second radio frequency tag 509 is to be read.

The system 501 further comprises a processor 511 for associating the second radio frequency tag 509 with the first radio frequency tag 505. The processor 511 creates a database of second radio frequency tags 509 associated with the first radio frequency tag 505, as multiple second radio frequency tags 509 are read using the second radio frequency tag reader 507.

The system 501 further comprises a third identifier reading device in the form of a third radio frequency tag reader 513, which is remote from the first radio frequency tag reader 503, at a location M. In a similar fashion to the first radio frequency tag reader 503, the third radio frequency tag reader 513 is adapted to read the first radio frequency tag 505 on a storage rack, which could for example be a storage rack 1, 101 as described with reference to Figures 1 to 3.

The third radio frequency tag reader 513 is incorporated in a second tray 513a, upon which the storage rack 1, 101 can conveniently sit when the first radio frequency tag 505 is to be read.

The system 501 further comprises a fourth identifier reading device in the form of a fourth radio frequency tag reader 515, which is also at location M. In a similar fashion to the second radio frequency tag reader 507, the fourth radio frequency tag reader 515 is adapted to read the second radio frequency tag 509 on a plastic bottle 3.

The fourth radio frequency tag reader 515 is incorporated in a second cup 515a, inside of which the plastic bottle 3 can conveniently sit when the second radio frequency tag 509 is to be read.

The system 501 further comprises a further processor 519 to which the processor 511 sends the database of second radio frequency tags 509 associated with the first radio frequency tag 505, which it has created. This transfer is typically via server connections such as via the internet as schematically indicated at 521. The further processor 519 is able to disassociate second radio frequency tags 509 from the first radio frequency tag 505, amending the database of second radio frequency tags 509 associated with the first radio frequency tag 505, as multiple second radio frequency tags 509 are read using the fourth radio frequency tag reader 507.

The system 501 further comprises a first load cell 517. The first load cell 517 is associated with the first radio frequency tag reader 503, and measures the mass of the storage rack 1, 101 and any plastic bottles 3 therein, when they are placed on the first load cell 517.

In the event that the processor 511 associates a second radio frequency tag 509 with the first radio frequency tag 505, but does not subsequently, within a predetermined period of time, detect an increase in the mass of the storage rack 1, 101 and any plastic bottles 3 therein, using the first load cell 517, then an alarm condition is initiated.

The system 501 further comprises a second load cell 518. The second load cell 518 is associated with the third radio frequency tag reader 513, and measures the mass of the storage rack 1, 101 and any plastic bottles 3 therein, when they are placed on the second load cell 518.

In the event that the further processor 519 detects a decrease in the mass of the storage rack 1, 101 and any plastic bottles therein, using the second load cell 518, but does not subsequently, within a predetermined period of time, disassociate a second radio frequency tag 509 from the first radio frequency tag 505, then a further alarm condition is initiated.

The first radio frequency tag 505 and the second radio frequency tags 509 each comprise printable electronics. In this way, the tags are not bulky, with the result that they can be conveniently attached to the storage rack 1, 101 and the plastic bottles 3, respectively, being able to be easily wrapped around a curved surface as required.

It is to be appreciated that the first radio frequency tag reader 503 could be incorporated in the storage rack 1, 101 itself. In this case, an induction charger (not shown) could be incorporated in the first tray 503a, to charge the first radio frequency tag reader 503, when required.

Use of the System will now be described. The system 501 allows for storing and tracking articles such as plastic bottles 3 containing biological samples, as will be described in further detail below.

In order to use the system 501, a user first uses the first radio frequency tag reader 503 at the origin of the plastic bottles 3, such as at a GP surgery (location O) to read a first radio frequency tag 505 on a storage rack 1, 101. This identifies the storage rack 1,101.

The user then uses the second radio frequency tag reader 507, also at the origin of the plastic bottles 3 and adjacent the first radio frequency tag reader 503, to read a second radio frequency tag 509 on a plastic bottle 3.

The processor 511 then associates the first radio frequency tag 505 with the second radio frequency tag 509, in a database.

The user then locates the plastic bottle 3 in the storage rack 1, 101. In this way, the plastic bottle 3 is "signed in."

The user then uses the second radio frequency tag reader 507 to read further second radio frequency tags 509 on further plastic bottles 3, before locating the plastic bottles 3 in the storage rack 1, 101, one by one. As the user locates the plastic bottles 3 in the storage rack 1, 101, the processor 511 associates further second radio frequency tags 509 with the first radio frequency tag 505, to add to the database.

In this way, a database is compiled, indicating which second radio frequency tags 509 are associated with the first radio frequency tag 505, and thereby indicating which plastic bottles 3 are located on the storage rack 1, 101.

In this way, a user can ascertain which plastic bottles 3 are on which storage rack 1, 101, and in doing so, track the progress of biological samples without having to track the plastic bottles 3, separately. This is achieved by accessing the database.

When the storage rack 1,101 has left the origin O, and has moved onwards to its destination M; for example, when it has reached the pathology laboratory, the user uses the third radio frequency tag reader 513 at the destination M to read the first radio frequency tag 505 on the storage rack 1,101. The user then removes a plastic bottle 3 from the storage rack 1,101, and uses the fourth radio frequency tag reader 515, also at destination M, to read the second radio frequency tag 509 on the plastic bottle 3 that they have just removed. The further processor 519 at the destination M then uses the database to ascertain whether the second radio frequency tag 509 is already associated with the first radio frequency tag 505, and if so, disassociates the second radio frequency tag 509 from the first radio frequency tag 505.

The user then uses the fourth radio frequency tag reader 515 to read further second radio frequency tags 509 on further plastic bottles 3, as the plastic bottles 3 are removed, one by one. As the user is doing this, the further processor 519 disassociates the further second radio frequency tags 509 on the removed plastic bottles 3, to amend the database. In this way, the plastic bottles 3 are "signed out."

It will be appreciated by persons skilled in the art that the above embodiments have been described by way of example only, and not in any limitative sense, and that various alterations and modifications are possible without departing from the scope of the invention as defined by the appended claims.

In particular, it is to be appreciated that the storage rack 1, 101 could comprise any suitable number of ridges 11, 111, to accommodate any suitable number of plastic bottles 3.

It is to be further appreciated that the storage rack 1, 101 could be colour coded; for example, whereby certain protrusions 7, 107 accommodate different types of biological sample.

It is to be further appreciated that a number of different storage racks 1, 101 could be linked together to form a single unitary storage rack 1, 101, when required, to provide a bespoke solution according to the size and purpose required.

It is to be further appreciated that other types of rack identifier and article identifier could be utilised, as an alternative to radio frequency tags. For example, barcodes or QR codes in conjunction with visual readers could in principle be used, or alternatively, nonvisual tags such as RFID tags.

## Claims

1. A method for storing and tracking articles, comprising the steps:
(a) using a first identifier reading device (503) to read a rack identifier on a rack (1, 101) having a datum surface (5, 105) and a multiplicity of weight-bearing portions (11, 111) for retaining articles (3) at a predetermined distance from the datum surface with each of said weight-bearing portion defining an opening (X, Y), allowing an article to extend therethrough if not supported on said weight-bearing portion, wherein the maximum size of article that can be received within at least one said weight-bearing portion differs with respect to the distance of said weight-bearing portion from said datum surface **characterised in that** said openings defined by said weight-bearing portions for different sized articles are nonconcentric such that multiple smaller openings overlap with a single larger opening;
(b) using a second identifier reading device (507) to read an article identifier on a said article (3); 74
(c) locating said article in said rack;
(d) in a processor (511) associating said article identifier with said rack identifier; and
(e) repeating steps b to d for further articles to create a database of article identifiers associated with said rack identifier.

2. A method as claimed in claim 1, further comprising sending the database from said processor (511) to a further processor (519) remote from said processor.

3. A method as claimed in claim 2, further comprising:
(f) using a third identifier reading device (513) at a predetermined location to read a rack identifier on a rack (1, 101) according to any of claims 1 to 6 for receiving articles (3)
(g) removing an article from said rack
(h) using a fourth identifier (515) reading device at said predetermined location to read an article identifier on a said article removed from said rack
(i) in said further processor disassociating said article identifier from said rack identifier if said article identifier is already associated with said rack identifier
(j) repeating steps b to d for further articles to amend said database of article identifiers associated with said rack identifier.

4. A method as claimed in any preceding claim, further comprising using at least one further identifier reader device at a predetermined location to read a rack identifier on a rack (1, 101) for receiving articles.

5. A method as claimed in any preceding claim, further comprising using a load cell (517, 518) to measure the mass of the rack (1, 101) and articles (3) therein and to detect a variation in mass not consistent with an expected interaction between a said article and said rack.

6. A method as claimed in claim 5, further comprising generating an alarm condition in the event that the detected variation in mass is not consistent with an expected interaction between a said article (3) and said rack (1, 101).

7. A method as claimed in any preceding claim, further comprising generating an alert in the event that a said article identifier is associated with said rack identifier.

8. A method as claimed in claim 7, further comprising generating a further alert in the event that a said article identifier is disassociated from said rack identifier.

9. A method as claimed in any preceding claim, said storage rack comprising substantially vertical surfaces (13, 113) extending between said weight-bearing portions (11, 111) and said datum surface (5, 105).

10. A method as claimed in claim 9, wherein said substantially vertical surfaces (13, 113) and said weight-bearing portions (11, 111) together define a plurality of connected tubes.

11. A method as claimed in any one of the previous claims, wherein said datum surface (5, 105) is disposed above said weight-bearing portions (11, 111), in use.

12. A method as claimed in claim 11 combined with claim 10, wherein articles are contained within said connected tubes (9, 109), in use.

13. A method as claimed in any one of claims 9 to 12, wherein said weight-bearing portions (11, 111) extend substantially perpendicularly from said substantially vertical surfaces (13, 113).

## Patentansprüche

1. Verfahren zum Lagern und Verfolgen von Artikeln, das die folgenden Schritte beinhaltet:
(a) Verwenden eines ersten Kennungslesegeräts (503) zum Lesen einer Regalkennung auf einem Regal (1, 101) mit einer Bezugsfläche (5, 105) und einer Vielzahl von lasttragenden Abschnitten (11, 111) zum Halten von Artikeln (3) in einem vorbestimmten Abstand von der Bezugsfläche, wobei jeder der genannten lasttragenden Abschnitte eine Öffnung (X, Y) definiert, durch die sich ein Artikel erstrecken kann, wenn er nicht auf dem genannten lasttragenden Abschnitt getragen wird, wobei die maximale Artikelgröße, die in mindestens einem der genannten lasttragenden Abschnitte aufgenommen werden kann, in Bezug auf den Abstand des genannten lasttragenden Abschnitts von der genannten Bezugsfläche variiert, **dadurch gekennzeichnet, dass** die durch die genannten lasttragenden Abschnitte für unterschiedlich große Artikel definierten Öffnungen nicht konzentrisch sind, so dass mehrere kleinere Öffnungen eine einzelne größere Öffnung überlappen;
(b) Verwenden eines zweiten Kennungslesegeräts (507) zum Lesen einer Artikelkennung auf einem Artikel (3); 74
(c) Lokalisieren des genannten Artikels in dem genannten Regal;
(d) Assoziieren der genannten Artikelkennung mit der genannten Regalkennung in einem Prozessor (511); und
(e) Wiederholen der Schritte b bis d für weitere Artikel, um eine Datenbank mit mit der genannten Regalkennung assoziierten Artikelkennungen zu erstellen.

2. Verfahren nach Anspruch 1, das ferner das Senden der Datenbank von dem genannten Prozessor (511) zu einem weiteren Prozessor (519) fern von dem genannten Prozessor beinhaltet.

3. Verfahren nach Anspruch 2, das ferner Folgendes beinhaltet:
(f) Verwenden eines dritten Kennungslesegeräts (513) an einem vorbestimmten Ort zum Lesen einer Regalkennung auf einem Regal (1, 101) nach einem der Ansprüche 1 bis 6 zum Aufnehmen von Artikeln (3);
(g) Entnehmen eines Artikels aus dem genannten Regal;
(h) Verwenden eines vierten Kennungslesegeräts (515) an dem genannten vorbestimmten Ort zum Lesen einer Artikelkennung auf einem genannten aus dem genannten Regal entnommenen Artikel;
(i) wobei der genannte weitere Prozessor die genannte Artikelkennung von der genannten Regalkennung disassoziiert, wenn die genannte Artikelkennung bereits mit der genannten Regalkennung assoziiert ist;
(j) Wiederholen der Schritte b bis d für weitere Artikel, um die genannte Datenbank von mit der genannten Regalkennung assoziierten Artikelkennungen zu ändern.

4. Verfahren nach einem vorherigen Anspruch, das ferner die Verwendung mindestens eines weiteren Kennungslesegeräts an einem vorbestimmten Ort zum Lesen einer Regalkennung auf einem Regal (1, 101) zum Aufnehmen von Artikeln beinhaltet.

5. Verfahren nach einem vorherigen Anspruch, das ferner die Verwendung einer Wägezelle (517, 518) zum Messen der Masse des Regals (1, 101) und der Artikel (3) darin und zum Erkennen einer Massenabweichung beinhaltet, die nicht mit einer erwarteten Interaktion zwischen einem genannten Artikel und dem genannten Regal übereinstimmt.

6. Verfahren nach Anspruch 5, das ferner das Erzeugen eines Alarmzustands beinhaltet, falls die erkannte Massenabweichung nicht mit einer erwarteten Interaktion zwischen einem genannten Artikel (3) und dem genannten Regal (1, 101) übereinstimmt.

7. Verfahren nach einem vorherigen Anspruch, das ferner das Erzeugen einer Warnung umfasst, falls eine genannte Artikelkennung mit der genannten Regalkennung assoziiert ist.

8. Verfahren nach Anspruch 7, das ferner das Erzeugen einer weiteren Warnung umfasst, falls eine genannte Artikelkennung von der genannten Regalkennung disassoziiert ist.

9. Verfahren nach einem vorherigen Anspruch, wobei das genannte Lagerregal im Wesentlichen vertikale Flächen (13, 113) umfasst, die sich zwischen den genannten lasttragenden Abschnitten (11, 111) und der genannten Bezugsfläche (5, 105) erstrecken.

10. Verfahren nach Anspruch 9, wobei die genannten im Wesentlichen vertikalen Flächen (13, 113) und die genannten lasttragenden Abschnitte (11, 111) zusammen mehrere verbundene Rohre definieren.

11. Verfahren nach einem der vorherigen Ansprüche, wobei die genannte Bezugsfläche (5, 105) bei Gebrauch über den genannten lasttragenden Abschnitten (11, 111) angeordnet ist.

12. Verfahren nach Anspruch 11 in Kombination mit Anspruch 10, wobei Artikel bei Gebrauch in den genannten verbundenen Rohren (9, 109) enthalten sind.

13. Verfahren nach einem der Ansprüche 9 bis 12, wobei sich die genannten lasttragenden Abschnitte (11, 111) im Wesentlichen lotrecht von den genannten im Wesentlichen vertikalen Flächen (13, 113) erstrecken.

## Revendications

1. Un procédé destiné à stocker et à suivre des articles, comprenant les étapes de :
(a) l'utilisation d'un premier dispositif de lecture d'identifiant (503) pour lire un identifiant de plateau sur un plateau (1, 101) ayant une surface de référence (5, 105) et une multiplicité de parties porteuses de poids (11, 111) pour maintenir des articles (3) à une distance prédéterminée de la surface de référence avec chacune desdites parties porteuses de poids définissant une ouverture (X, Y), permettant à un article de s'étendre à travers celle-ci s'il n'est pas supporté sur ladite partie porteuse de poids, dans lequel la dimension d'article maximale qui peut être reçue à l'intérieur d'au moins une desdites parties porteuses de poids diffère par rapport à la distance de ladite partie porteuse de poids et de ladite surface de référence, **caractérisé en ce que** lesdites ouvertures définies par lesdites parties porteuses de poids pour des articles de dimension différente sont non concentriques de telle sorte que des ouvertures multiples plus petites se superposent avec une seule ouverture plus grande ;
(b) l'utilisation d'un deuxième dispositif de lecture d'identifiant (507) pour lire un identifiant d'article sur un article donné (3) ; 74
(c) le placement dudit article dans ledit plateau ;
(d) dans un processeur (511) l'association dudit identifiant d'article avec ledit identifiant de plateau ; et
(e) la répétition des étapes b à d pour d'autres articles pour créer une base de données d'identifiants d'articles associés audit identifiant de plateau.

2. Un procédé selon la revendication 1, comprenant en outre l'envoi de la base de données depuis ledit processeur (511) à un autre processeur (519) à distance dudit processeur.

3. Un procédé selon la revendication 2, comprenant en outre :
(f) l'utilisation d'un troisième dispositif de lecture d'identifiant (513) à un emplacement prédéterminé pour lire un identifiant de plateau sur un plateau (1, 101) selon l'une quelconque des revendications 1 à 6 pour recevoir des articles (3)
(g) le retrait d'un article dudit plateau
(h) l'utilisation d'un quatrième dispositif de lecture d'identifiant (515) audit emplacement prédéterminé pour lire un identifiant d'article sur un article donné retiré dudit plateau
(i) dans ledit autre processeur la désassociation dudit identifiant d'article d'avec ledit identifiant de plateau si ledit identifiant d'article est déjà associé audit identifiant de plateau
(j) la répétition des étapes b à d pour d'autres articles pour modifier ladite base de données d'identifiants d'articles associés audit identifiant de plateau.

4. Un procédé selon l'une quelconque des revendications précédentes, comprenant en outre l'utilisation d'au moins un autre dispositif de lecture d'identifiant à un emplacement prédéterminé pour lire un identifiant de plateau sur un plateau (1, 101) pour recevoir des articles.

5. Un procédé selon l'une quelconque des revendications précédentes, comprenant en outre l'utilisation d'un capteur de force (517, 518) pour mesurer la masse du plateau (1, 101) et des articles (3) qui y sont et pour détecter une variation de la masse qui ne correspond pas à une interaction attendue entre un article donné et ledit plateau.

6. Un procédé selon la revendication 5, comprenant en outre la génération d'une condition d'alarme dans le cas où la variation de la masse détectée ne correspond pas à une interaction attendue entre un article donné (3) et ledit plateau (1, 101).

7. Un procédé selon l'une quelconque des revendications précédentes, comprenant en outre la génération d'une alerte dans le cas où ledit identifiant d'article donné est associé audit identifiant de plateau.

8. Un procédé selon la revendication 7, comprenant en outre la génération d'une autre alerte dans le cas où ledit identifiant d'article donné est désassocié dudit identifiant de plateau.

9. Un procédé selon l'une quelconque des revendications précédentes, ledit plateau de stockage comprenant des surfaces sensiblement verticales (13, 113) qui s'étendent entre lesdites parties porteuses de poids (11, 111) et ladite surface de référence (5, 105).

10. Un procédé selon la revendication 9, dans lequel lesdites surfaces sensiblement verticales (13, 113) et lesdites parties porteuses de poids (11, 111) définissent ensemble une pluralité de tubes connectés.

11. Un procédé selon l'une quelconque des revendications précédentes, dans lequel ladite surface de référence (5, 105) est disposée au-dessus desdites parties porteuses de poids (11, 111), lors de l'utilisation.

12. Un procédé selon la revendication 11 combiné avec la revendication 10, dans lequel des articles sont contenus à l'intérieur desdits tubes connectés (9, 109), lors de l'utilisation.

13. Un procédé selon l'une quelconque des revendications 9 à 12, dans lequel lesdites parties porteuses de poids (11, 111) s'étendent sensiblement perpendiculairement auxdites surfaces sensiblement verticales (13, 113).
